Europäisches Patentamt

European Patent Office

Office européen des brevets

(19)

(11) Veröffentlichungsnummer: **0 289 800**

**A2**

(12) # EUROPÄISCHE PATENTANMELDUNG

(21) Anmeldenummer: 88105596.6

(22) Anmeldetag: 08.04.88

(51) Int. Cl.4: **A23F 5/04 , A47J 31/00**

(30) Priorität: 07.05.87 DE 3715165

(43) Veröffentlichungstag der Anmeldung:
09.11.88 Patentblatt 88/45

(84) Benannte Vertragsstaaten:
AT BE CH DE ES FR GB GR IT LI LU NL SE

(71) Anmelder: **Melitta-Werke Bentz & Sohn K.G.**
**Ringstrasse 99**
**D-4950 Minden(DE)**

(72) Erfinder: **Häuslein, Reinhard**
**Lange Wand 26**
**D-4950 Minden(DE)**

(74) Vertreter: **Loesenbeck, Karl-Otto, Dipl.-Ing. et**
**al**
**Jöllenbecker Strasse 164**
**D-4800 Bielefeld 1(DE)**

(54) Verfahren zur Herstellung von Aromaauszügen aus Kaffee und Vorrichtung zur Durchführung des Verfahrens.

(57) Es soll ein Verfahren zur Herstellung von Aromaauszügen aus Kaffee geschaffen werden, nach dem es möglich ist, Aromaauszüge aus Kaffee herzustellen, die ohne Aromaverlust lange haltbar sind.

Dies wird dadurch erreicht, daß der Kaffee während der gesamten Einwirkzeit des Brühwassers in weitestgehend gleichmäßiger Verteilung im Brühwasser verwirbelt wird.

Zu diesem Zweck kann beispielsweise ein Filter-Gefäß (10) mit einem eingesetzten Filter (11) mit einem Rührwerk (12) versehen sein, welches das eingefüllte Kaffeemehl während der Einwirkzeit des eingefüllten Brühwassers in diesem Brühwasser weitestgehend gleichmäßig verwirbelt.

Das Rührwerk (12) kann sowohl rotativ wie auch längs seiner Drehachse bewegt werden.

Fig. 1

EP 0 289 800 A2

# Verfahren zur Herstellung von Aromaauszügen aus Kaffee und Vorrichtung zur Durchführung des Verfahrens

Die vorliegende Erfindung betrifft ein Verfahren zur Herstellung von Aromaauszügen aus Kaffee, wobei auf gemahlenen Kaffee Brühwasser aufgegossen und dieses nach einer vorbestimmten Einwirkzeit und damit verbundene Aufnahme von Aromastoffen aus dem Kaffee als Extrakt abgefiltert wird.

Bei den bislang angewendeten Verfahren zur Herstellung von Aromaauszügen aus Kaffee wird das Brühwasser auf den gemahlenen Kaffee aufgegossen und läuft als Extrakt unmittelbar aus demjenigen Gefäß heraus, welches den Kaffee und einen geeigneten Filter aufnimmt.

Ein derart hergestellter Aromaauszug aus Kaffee ist nur sehr begrenzt haltbar, d.h., daß ein derartiger Aromaauszug schon nach geringer Standzeit erheblich an Geschmack verliert.

Der vorliegenden Erfindung liegt die Aufgabe zugrunde, ein Verfahren der gattungsgemäßen Art zu schaffen, nach dem es auf wirtschaftliche Weise möglich ist, extrem lange haltbare Aromaauszüge aus Kaffee herzustellen.

Diese Aufgabe wird erfindungsgemäß dadurch gelöst, daß der Kaffee während der gesamten Reaktionszeit des Brühwassers in weitestgehend gleichmäßiger Verteilung im Brühwasser verwirbelt wird.

Es hat sich gezeigt, daß durch diese Verwirbelung des Kaffees innerhalb des Brühwassers ein Aromaauszug gewonnen wird, der auch nach langer Lagerzeit nichts von seinem Wohlgeschmack einbüßt.

Dies wird darauf zurückgeführt, daß durch die Verwirbelung des Kaffees im Brühwasser eine Entgasung stattfindet, mittels derer diejenigen Stoffe, die zu einer Beeinträchtigung der Lagerfähigkeit des Aromaauszuges führten, aus dem Extrakt entfernt werden.

Die vorliegende Erfindung betrifft weiterhin eine Vorrichtung zur Durchführung des vorstehend genannten Verfahrens.

Eine erfindungsgemäße Vorrichtung dieser Art ist gekennzeichnet durch ein Gefäß mit einer Verwirbelungseinrichtung zur Verwirbelung des Kaffees im Brühwasser.

Das Gefäß selbst muß keinen separaten Auslauf haben, es kann ach der Einwirkzeit des Brühwassers durch Ausgießen und Filtrieren des Extraktes der gewonnene Aromaauszug in ein separates Gefäß umgefüllt werden, es ist allerdings auch denkbar, das Gefäß mit einem Auslauf auszustatten und auslaufseitig mit einem steuerbaren Ablaufventil zu versehen.

Weitere Merkmale der Erfindung sind Gegenstand von Unteransprüchen.

In den beigefügten Zeichnungen sind Vorrichtungen zur Durchführung des erfindungsgemäßen Verfahrens dargestellt, die im folgenden unter zusätzlicher Erläuterung des erfindungsgemäßen Verfahrens ausführlich beschrieben werden. Es zeigen:

Fig. 1 eine schematische Schnitt-Darstellung durch eine Vorrichtung zur Herstellung von Aromaauszügen aus Kaffee

Fig. 2 einen Schnitt nach der Linie II-II in Fig. 1

Fig. 3 einen schematisch dargestellten Schnitt durch eine Vorrichtung nach einem weiteren Ausführungsbeispiel der Erfindung

Fig. 4 einen Schnitt nach der Linie IV-IV in Fig. 3

Fig. 5 einen Schnitt durch eine Vorrichtung zur Herstellung von Aromaauszügen aus Kaffee nach einem weiteren Ausführungsbeispiel der Erfindung

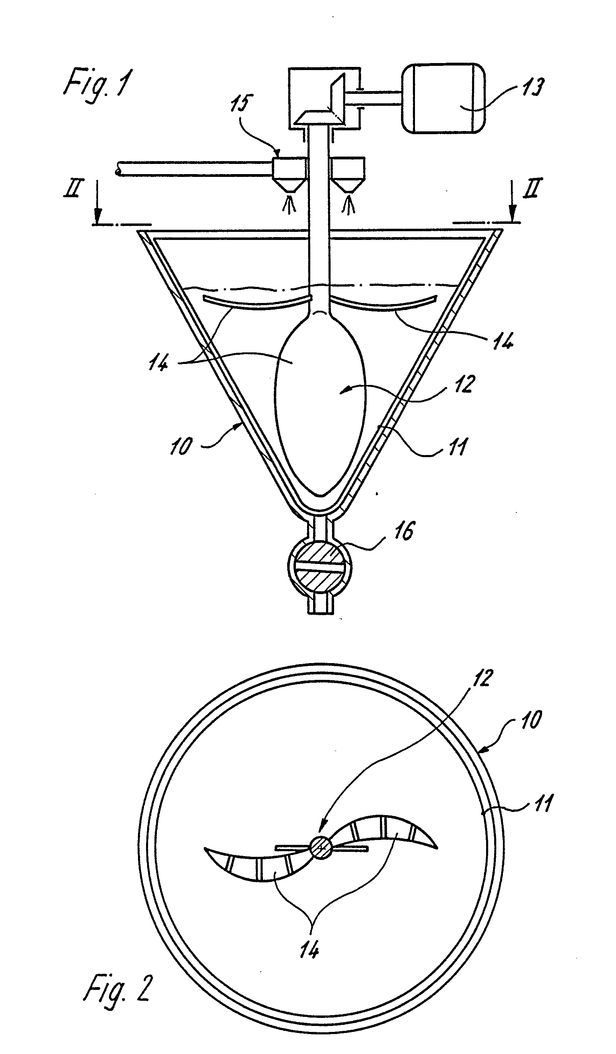

In Fig. 1 ist mit dem Bezugszeichen 10 ein Filter-Gefäß bezeichnet, welches einen entsprechend geformten Papierfilter 11 aufnimmt.

In diesen Papierfilter wird Kaffeemehl eingefüllt.

Weiterhin ragt in den Innenraum des Filter-Gefäßes 10 ein Rührwerk 12 hinein, welches über einen Motor 13 in eine rotierende Bewegung versetzt werden kann.

Durch geeignete Ausbildung des Antriebes kann auch zusätzlich noch die Möglichkeit geschaffen werden, das Rührwerk 12 in Richtung seiner Drehachse auf und ab zu bewegen.

Die Flächen der Rührwerks-Flügel 14 sind strömungstechnisch so gestaltet, daß eine wallende Bewegung erreicht wird.

Oberhalb des Filter-Gefäßes 10 ist ein Brühwasserzulauf 15 angeordnet, über den Brühwasser in das Filter-Gefäß 10 eingefüllt werden kann.

Auslaufseitig ist das Filter-Gefäß 10 mit einem Absperrventil 16 versehen, welches in Fig. 1 in seiner Schließstellung gezeigt ist.

Un mit der vorstehend beschriebenen Vorrichtung lagerfähige, d.h., aromastabilisierte Aromaauszüge aus Kaffee herzustellen, wird nach Einfüllen einer vorbestimmten Menge von vorzugsweise gemahlenem Kaffee in den Papierfilter 11 über den Brühwasserzulauf 15 Brühwasser aufgegossen, gleichzeitig wird das Rührwerk 12 in Bewegung versetzt. Das Rührwerk 12 sorgt für eine gleichmäßige Verwirbelung des Kaffeemehles, womit eine intensive Entgasung des Kaffees und damit eine Herabsetzung des Säuregehaltes bewirkt wird. Es wird die Kohlendioxydentgasung gefördert, woduch der gewonnene Aromaauszug sowohl im kalten Zustand wie auch bei Raumtemperatur einer längeren Lagerzeit ohne damit bislang verbundenen Aromaverlust unterworden werden kann.

Nach einer vorbestimmten Reaktionszeit des Brühwassers und der damit verbundenen Aufnahme von Aroma-Stoffen aus dem Kaffee wird der gewonnene Extrakt ausgefiltert, was dadurch geschieht, daß das Absperrventil 16 geöffnet wird. Der Aromaauszug wird dann in einem Sammelgefäß aufgefangen.

Es ist möglich, die gesamte Brühwassermenge für den gewünschten Aromaauszug auf einmal zuzugeben, ebenso ist es denkbar, die gesamte Brühwassermenge in mehreren Teilmengen in das Filter-Gefäß 10 einzufüllen und mit dem Kaffeemehl reagieren zu lassen.

Mit der vorstehend beschriebenen Verfahrensweise kann sowohl ein Aromaauszug aus Kaffee in Trinkstärke hergestellt werden wie auch ein relativ starker Extrakt, der vor dem Verzehr noch auf Trinkstärke herabgesetzt werden muß.

In beiden Fällen sind die gewonnenen Aromaauszüge ohne Aromaverlust über längere Zeit haltbar.

Besonders vorteilhaft ist die Anwendung des vorstehend beschriebenen Verfahrens naturgemäß bei der Herstellung von solchen Aromaauszügen, die vor dem Verzehr noch auf Trinkstärke herabzusetzen sind.

Dies kann dann in einfache Art und Weise durch Aufgießen mit heißem Wasser geschehen, sodaß der Benutzer ohne großen Aufwand eine trinkfertige Tasse Kaffee erhält.

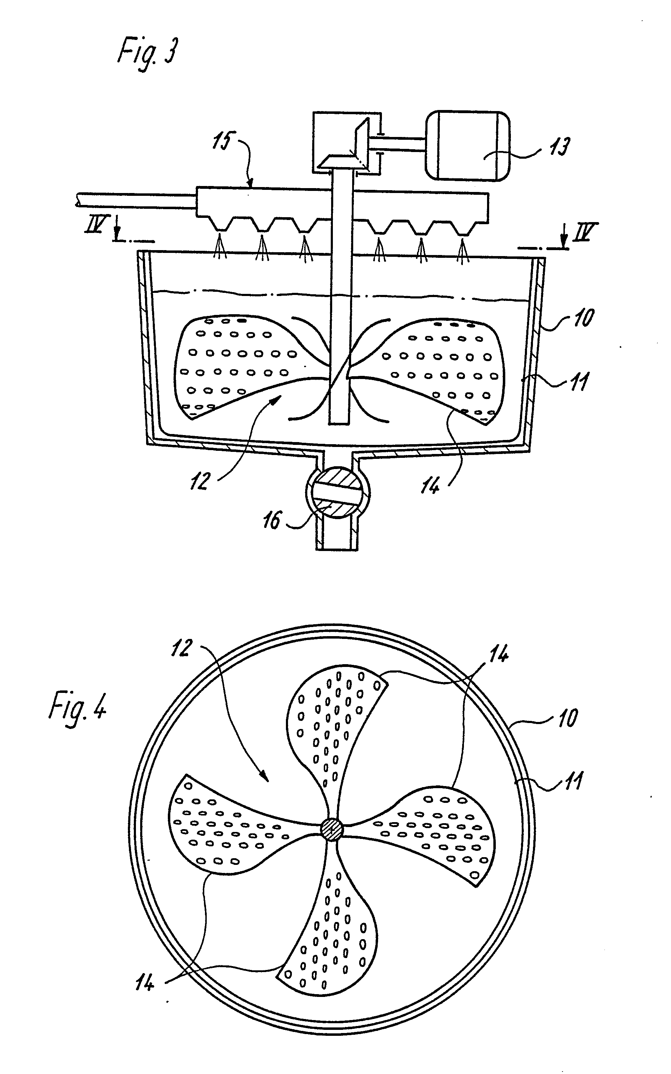

In den Fig. 3 und 4 ist eine weitere Vorrichtung zur Durchführung des erfindungsgemäßen Verfahrens dargestellt. Auch hier ist ein Filter-Gefäß 10 vorgesehen, welches einen Papierfilter 11 aufnimmt.

Allerdings ist die Querschnittsform des Filter-Gefäßes 10 nach Fig. 3 im Gegensatz zum spitzkegelförmigen Filter-Gehäuse 10 gemäß Fig. 1 etwa zylindrisch ausgeführt, darüber hinaus ist die Form der Rührflügel 14 des Rührwerkes 12 abweichend gestaltet von der Form der Rührflügel 14 des Rührwerkes 12 nach dem Ausführungsbeispiel gemäß Fig. 1.

Übereinstimmend ist auch hier wieder die Form der Rührflügel 14 so gewählt, daß sich bei laufendem Rührwerk 12 innerhalb des Filter-Gefäßes 10 eine wallende Bewegung ergibt mit dem Ziel, das eingefüllte Kaffeemehl im Brühwasser möglichst gleichmäßig zu verwirbeln, um die angestrebte intensive Entgasung des Kaffees zu erreichen.

Weiterhin ist es denkbar, das Ausfiltern des gewonnenen Aromaauszuges dadurch zu bewirken, daß aus einem beliebigen Gefäß der gewonnene Aromaauszug ausgegossen und durch einen geeigneten Filter geleitet wird.

Die Formen der Gehäuse 10 können beliebig gewählt werden, es ist lediglich sicherzustellen, daß während der Einwirkdauer des Brühwassers eine möglichst gleichmäßige und intensive Verwirbelung des eingefüllten Kaffeemehles im Brühwasser erfolgt.

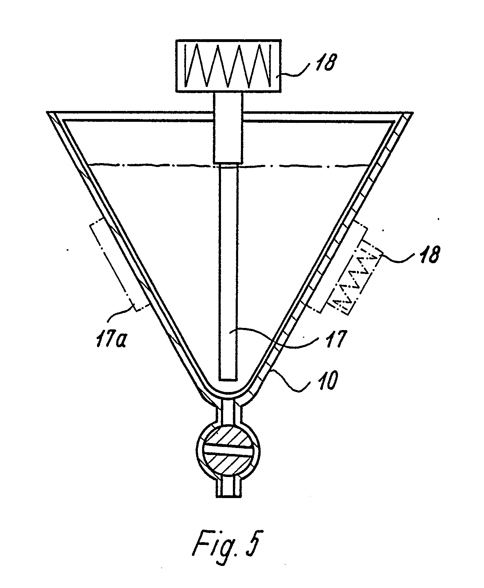

Die Fig. 5 zeigt eine schematische Darstellung einer erfindungsgemäßen Vorrichtung, bei der die Verwirbelung des Kaffeemehles durch Ultraschallwellen bewirkt wird.

Im Gefäß 10 ist eine stabförmige Sonotrode 17 vorgesehen, die über einen außerhalb des Gefäßes 10 angeordneten Ultraschall-Generator 18 erregt wird.

Über die stabförmige Sonotrode 17 wird das Kaffeemehl während der Reaktionszeit des Brühwassers in diesen in gleichmäßiger Verwirbelung gehalten.

Wie Fig. 5 weiterhin zeigt, kann auch eine Ring-Sonotrode 17a verwendet werden, die beispielsweise am äußeren Umfang des Gefäßes 10 angeordnet ist. Ebenso ist es aber auch denkbar, eine Ring-Sonotrode 17a innerhalb des Gefäßes 10 anzuordnen.

Auch die Ring-Sonotrode 17a wird über einen Ultraschall-Generator 18 erregt.

Es hat sich herausgestellt, daß eine Reaktionszeit des Brühwassers von etwa 6-15 min. bei Reaktionstemperaturen von etwa 70°C für die Durchführung des erfindungsgemäßen Verfahrens von Vorteil ist. Allerdings sind auch andere Reaktionszeiten sowie andere Reaktionstemperaturen möglich, wobei dies in erster Linie abhängig ist vom Mahlgrad des Kaffeemehles sowie von der Menge des herzustellenden Aromaauszuges.

## Ansprüche

1. Verfahren zur Herstellung von Aromaauszügen aus Kaffee, wobei auf gemahlenen Kaffee Brühwasser aufgegossen und dieses nach einer vorbestimmten Einwirkzeit und damit verbundener Aufnahme von Aromastoffen aus dem Kaffee als Extrakt ausgefiltert wird, **dadurch gekennzeichnet, daß** der Kaffee während der gesamten Reaktionszeit des Brühwassers in weitestgehend gleichmäßiger Verteilung im Brühwasser verwirbelt wird.

2. Verfahren nach Anspruch 1, dadurch gekennzeichnet, daß die Verwirbelung des Kaffees mechanisch erfolgt.

3. Verfahren nach Anspruch 1, dadurch gekennzeichnet, daß die Verwirbelung des Kaffees durch Ultraschallwellen erfolgt.

4. Verfahren nach einem oder mehreren der Ansprüche 1 bis 3, dadurch gekennzeichnet, daß die gesamte Menge des Brühwassers für die Herstellung einer vorbestimmten Menge des Aromaauszuges in einem Füllvorgang auf das Kaffeemehl aufgegossen wird.

5. Verfahren nach einem oder mehreren der Ansprüche 1 bis 3, dadurch gekennzeichnet, daß die gesamte Brühwassermenge in mehreren Intervallen auf das Kaffeemehl aufgegossen wird.

6. Vorrichtung zur Durchführung des Verfahrens nach einem oder mehreren der Ansprüche 1 bis 5, gekennzeichnet durch ein Gefäß (10) mit einer Verwirbelungseinrichtung zur Verwirbelung des Kaffees im Brühwasser.

7. Vorrichtung nach Anspruch 6, dadurch gekennzeichnet, daß die Verwirbelungseinrichtung ein motorisch antreibbares Rührwerk (12) ist.

8. Vorrichtung nach Anspruch 6, dadurch gekennzeichnet, daß die Verwirbelungseinrichtung ein Ultraschallwellen-Generator ist.

9. Vorrichtung nach einem oder mehreren der Ansprüche 6 bis 8, dadurch gekennzeichnet, daß das Gefäß (10) auslaufseitig mit einem steuerbaren Absperrventil (16) versehen ist.

10. Vorrichtung nach einem oder mehreren der Ansprüche 6 bis 9, dadurch gekennzeichnet, daß das Gefäß (10) als Filtergefäß ausgebildet und mit einem Filtereinsatz (11) versehen ist.

11. Vorrichtung nach Anspruch 10, dadurch gekennzeichnet, daß der Filtereinsatz aus Filterpapier besteht.

12. Vorrichtung nach Anspruch 7, dadurch gekennzeichnet, daß das Rührwerk (12) über einen Motor (13) rotativ antreibbar ist.

13. Vorrichtung nach Anspruch 12, dadurch gekennzeichnet, daß das Rührwerk (12) zusätzlich zu seiner Drehbewegung in eine Auf-und Abbewegung versetzbar ist.

14. Vorrichtung nach Anspruch 6, dadurch gekennzeichnet, daß an den Ultraschallwellen-Generator eine innerhalb oder außerhalb des Gefäßes (10) angeordnete Sonotrode angeschlossen ist.

15. Vorrichtung nach Anspruch 14, dadurch gekennzeichnet, daß die Sonotrode eine Stab-Sonotrode ist.

16. Vorrichtung nach Anspruch 14, dadurch gekennzeichnet, daß die Sonotrode eine Ring-Sonotrode ist.

*Fig.1*

15

13

*II*                                      *II*

14

14

12

10

11

16

12

10

11

14

*Fig. 2*

**Fig. 3**

**Fig. 4**

*Fig. 5*

*Melitta*